# EUROPÄISCHE PATENTANMELDUNG

(11) **EP 0 791 316 A1**
(43) Veröffentlichungstag der Anmeldung: **27.08.1997**
(21) Anmeldenummer: 97102340.3
(22) Anmeldetag: 13.02.1997
(51) Int. Cl.: A47B 96/14, F16S 3/02

(54) **Metallprofil für die Bildung von Rahmenwerken mit Eckverbindungen**

(30) Priorität: 23.02.1996 DE 29603258 U
(71) Anmelder: Erbslöh Aktiengesellschaft, 42553 Velbert (DE)
(72) Erfinder: Grosch, Karl, 42111 Wuppertal (DE)
(74) Vertreter: Ernicke, Hans-Dieter, Dipl.-Ing.

(57) **Zusammenfassung**

Die Erfindung befaßt sich mit einer Weiterbildung der Lehre nach dem DE-U-93 19 206, wonach in den Wandungen von metallischen Hohlprofilen wandschwächende, durchlaufende Rinnen vorgesehen sind, die das Abtrennen der dazwischen befindlichen Wandstreifen ermöglichen. Um die Einsatzmöglichkeit solcher Metallprofile zu erweitern, wird mit der Erfindung vorgeschlagen, den abgetrennten Wandstreifen (9) durch ein Einsatzprofil (10) aus Leichtmetall zu ersetzen. Dieses weist eine den Rand (16) der Wandöffnung (17) hintergreifende Abstufung (11) und an seiner innenliegenden Seite eine Führung (12) zur Aufnahme eines Federelementes (13) auf, das sich beim Einführen des Einsatzprofils in die Wandöffnung (17) am Innenrohr (3) des Metallprofiles federnd abstützt.

## Beschreibung

Die Erfindung bezieht sich auf ein Metallprofil, insbesondere aus Leichtmetall, für die Bildung von Rahmenwerken mit Eckverbindungen, entsprechend den im Oberbegriff des Schutzanspruches 1 angegebenen Merkmalen.

Durch das DE-GM 93 19 206 ist ein solches Metallprofil bekannt geworden. Es besteht im Prinzip aus einem Außenrohr und aus einem Innenrohr, die beide durch Stege miteinander verbunden sind. Wenn der Querschnitt des Metallprofiles quadratisch oder rechteckig ist, erstrecken sich die Stege im Prinzip diagonal. Bei runden oder ovalen Metallprofilen weisen die Stege in radialer Richtung.

Der besondere Effekt dieser vorbekannten Metallprofile besteht darin, daß in der außenliegenden Wand des Außenrohres sich wandschwächende und durchlaufende Rinnen erstrecken, die zueinander parallel sind und zwischen sich Wandstreifen bilden, die durch Abreißen, Abschälen, Abschneiden oder dergleichen abtrennbar sind. Auf diese Weise wird eine zwischen dem Außenrohr, dem Innenrohr und den Stegen befindliche Nut nach außen freigelegt, so daß an der freigelegten Stelle andere Profile angeschlossen oder die verbleibenden Wände des Außenrohres hintergreifende Schrauben oder sonstige Verbindungsmittel eingesetzt werden können.

In der Praxis wird diese vorbekannte Lehre so gehandhabt, daß am Beginn und am Ende eines abzutrennenden Wandabschnittes die Wand des Außenrohres durchbohrt wird. Danach kann der dazwischen befindliche Wandabschnitt problemlos abgetrennt werden.

Es gibt aber zahlreiche Anwendungsfälle, bei denen der abgetrennte Wandstreifen größer als das anzuschließende Element ist. In diesem Falle würde die durch den abgetrennten Wandstreifen sichtbar gewordene Nut des Metallprofils ein nicht erwünschtes äußeres Erscheinungsbild hervorrufen.

Der Erfindung liegt daher die Aufgabe zugrunde, die Einsatzmöglichkeiten des vorbekannten Metallprofiles zu erweitern und die geschilderten Nachteile zu vermeiden, d. h. insbesondere, das Erscheinungsbild der im Rahmenwerk montierten Metallprofile zu verbessern.

Die erfindungsgemäße Lösung dieser gestellten Aufgabe ergibt sich aus den kennzeichnenden Merkmalen des Schutzanspruches 1.

Danach sieht die Erfindung ein Einsatzprofil vor, das an die Stelle des abgetrennten Wandstreifens oder eines Teiles davon in das Metallprofil eingesetzt werden kann. Zu diesem Zweck weist das Einsatzprofil an seinen außenliegenden Rändern eine der Wandstärke des Wandstreifens entsprechend tiefe, den Rinnenrand hintergreifende Abstufung auf, die bei ordnungsgemäßem Einführen des Einsatzprofiles in das Metallprofil eine Entnahme nach außen verhindert. Damit das Einsatzprofil eine ordnungsgemäße Lagerorientierung besitzt, befindet sich an seiner Innenseite ein federnd abstützendes Federelement. Dieses stützt sich an der Außenwand des Innenrohres ab und drückt somit das Einsatzprofil gegen die stehengebliebenen Ränder des Außenrohres. Der erhabene Bereich des Einsatzprofiles nimmt gewissermaßen die Stelle des abgetrennten Wandstreifens ein. Folglich sollte dadurch Bündigkeit der Außenfläche des Metallprofiles bei eingesetzten Einsatzprofil gewährt bleiben. Außerdem sollte das Erscheinungsbild der in der Außenfläche des Außenrohres des Metallprofiles erkennbaren wandschwächenden Rinnen trotz Abtrennens eines Wandstreifens und Einsetzens eines Einsatzprofiles gewahrt bleiben. Entsprechend ist die Dimensionierung des Einsatzprofiles im Querschnitt vorzunehmen.

Vorteilhafte Ausgestaltungen des Gegenstandes der Erfindung ergeben sich aus den Schutzansprüchen 2 bis 4, deren Merkmale in der Zeichnung dargestellt und beschrieben sind.

Der Gegenstand der Schutzansprüche 5 und 6 geht zwar vom Schutzanspruch 1 aus, enthält aber eine vorteilhafte Weitergestaltung des Metallprofiles über die Lehre des Standes der Technik hinaus, die sich aus der Anordnung des erfindungsgemäßen Einsatzprofiles ergibt.

Mit der vorliegenden Erfindung wurde nämlich erkannt, daß nicht irgendeine Wandschwächung im Außenrohr des Metallprofiles ständig wiederholbare gleiche Ergebnisse erbringt, sondern daß man mit einer besonderen Formgebung der Wandschwächungen ein gezieltes Abtrennen des Wandstreifens und demgemäß ein verbessertes Einführen des Einsatzprofiles erreichen kann.

Deshalb wird im Schutzanspruch 5 vorgeschlagen, die einzelne Wandschwächung des Außenrohres des Metallprofiles aus einer verhältnismäßig breiten und tiefen außenliegenden Rinne und aus einer weniger breiten und weniger tiefen innenliegenden Rinne zu bilden, die gegenüber der Mitte der außenliegenden Rinne in Richtung zum abtrennbaren Wandstreifen versetzt ist.

Einer solche von beiden Seiten der Wand des Außenrohres gebildeten Wandschwächung liegt die Erkenntnis zugrunde, daß der nach Abtrennen des Wandstreifens verbleibende Rand des Außenrohres stufenartig abgesetzt ist. Die Trennlinie längs der Ränder des abgetrennten Wandstreifens ist präzise. Dadurch ergibt sich die Möglichkeit, daß der verbleibende Rand des Außenrohres in die am Rand des Einsatzprofiles befindliche Abstufung eingreift und dadurch das Abheben des Einsatzprofiles nach außen verhindert und andererseits das Erscheinungsbild der Rinnen des Metallprofiles im Bereiche des Einsatzprofiles fortsetzt.

Damit der Wandstreifen leicht vom Außenrohr des Metallprofiles abtrennbar ist, empfiehlt sich die Anwendung der Merkmale des Schutzanspruches 6, wodurch ebenfalls eine konkrete Trennebene des Wandstreifens gegenüber dem verbleibenden Teil des Außenrohres gebildet wird.

Einzelheiten der Erfindung sind in der Zeichnung schematisch und beispielsweise dargestellt. Es zeigen:
- Figur 1:: einen Querschnitt (in vergrößerter Darstellung) eines Metallprofiles mit abtrennbaren Wandstreifen,
- Figur 2:: einen Teilquerschnitt durch das Metallprofil gemäß Figur 1 mit bereits abgetrenntem Wandstreifen und
- Figur 3:: einen Teilquerschnitt gemäß Figur 2 durch das Metallprofil mit einem in das Metallprofil eingeführten Einsatzprofil.

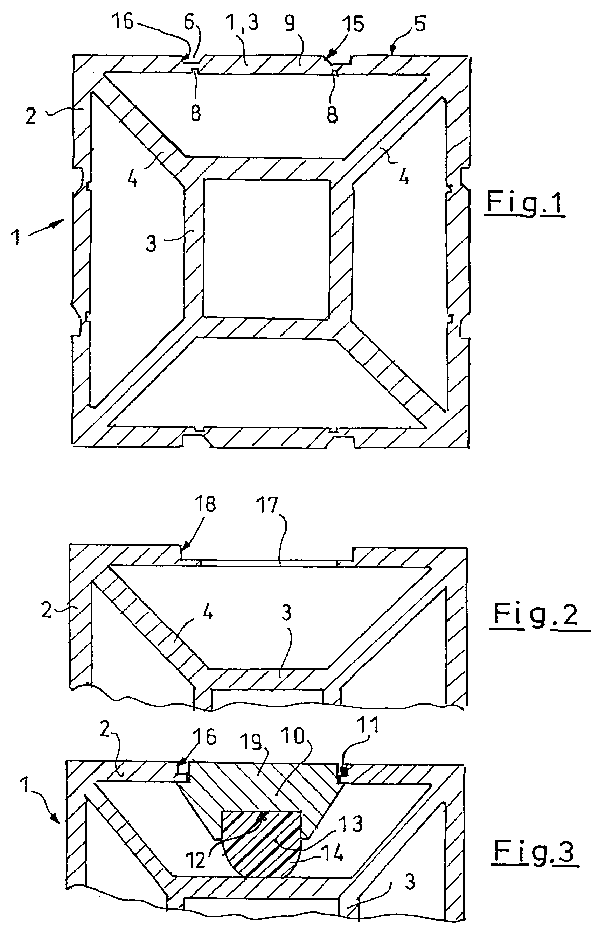

Die Figur 1 geht im Prinzip vom Stand der Technik gemäß DE-GM 93 19 206 aus, weshalb eine nähere Erläuterung über Größe und Beschaffenheit des Metallprofils (1) entbehrlich ist. Maßgeblich ist, daß das Metallprofil (1) aus Leichtmetall, insbesondere aus Aluminium oder einer der Aluminiumlegierungen besteht. Das Metallprofil (1) setzt sich grundlegend aus einem Außenrohr (2), einem Innenrohr (3) und diese Rohre (2,3) verbindende Stege (4) zusammen. Beim Ausführungsbeispiel der Figur 1 ist ein quadratischer Querschnitt des Außenrohres (2) und des Innenrohres (3) gezeigt, wodurch jedoch die Erfindung nicht beschränkt ist. Die Erfindung ermöglicht vielmehr beliebige Querschnittsformen des Metallprofiles (1), soweit dieses durch Außenrohr (2), Innenrohr (3) und Stege (4) partiell hohl ist.

Die im Beispiel der Figur 1 in der Außenwandfläche (5) des Außenrohres (2) dargestellte einzelne Rinne (6) unterscheidet sich bereits vom Stand der Technik. Sie weist nämlich einen verhältnismäßig breiten Querschnitt und eine verhältnismäßig große Tiefe auf. Der dem abtrennbaren Wandstreifen (9) zugekehrte Rinnenrand (15) ist verhältnismäßig stark abgeschrägt. An der Innenfläche (7) des Außenrohres (2) befindet sich gegenüber der Rinne (8), jedoch von deren Mitte in Richtung zum Wandstreifen (9) seitlich versetzt eine weitere innenliegende Rinne (8), deren Lage maßgeblich dafür ist, an welcher Stelle der verbleibenden Wandung des Außenrohres (2) der Wandstreifen (9) abgetrennt wird.

Die Figur 2 zeigt, welches Erscheinungsbild die Wand des Außenrohres (2) des Metallprofiles (1) nach dem Abtrennen des Wandstreifens (9) besitzt. Man erkennt eine streifenförmige Wandöffnung (17), die an ihren Rändern eine stufenförmige Gestaltung (18) aufweist, welche durch die vorstehend erwähnten Rinnenränder (15,16) herbeigeführt wird.

Die Figur 3 zeigt nun im Querschnitt ein einzelnes Einsatzprofil (10), das an die Stelle des vorher abgetrennten Wandstreifens (9) in das Metallprofil (1) so einsetzbar ist, daß es den Eindruck erweckt, als wäre gar kein Wandstreifen abgetrennt worden.

Das Einsatzprofil (10) weist zunächst einen erhabenen Bereich (19) auf, der in die streifenförmige Wandöffnung (17) gemäß Figur 2 eingreift und dadurch Bündigkeit der Außenflächen des Einsatzprofiles (10) gegenüber dem Außenrohr (2) aufweist. Zwischen dem erhabenen Bereich (19) und dem einzelnen Rinnenrand (16) verbleibt ein schmaler Spalt, der praktisch die außenliegende Rinne (6) gemäß Figur 1 im Metallprofil (1) fortsetzt, wenn dort ein Wandstreifen (9) nicht abgetrennt worden ist.

Damit das Einsatzprofil (10) nicht nach außen abhebbar ist, weist es an seinen Rändern eine Abstufung (11) auf, die so dimensioniert ist, daß der erhabene Bereich (19) des Einsatzprofiles (10) etwa der Wandstärke des abgetrennten Wandstreifens (9) entspricht und die Abstufung (11) den verbleibenden Rand der Wandöffnung (17) hintergreift.

Ein so ausgestaltetes Einsatzprofil (10) wird in der montierten Stellung gemäß Figur 3 gegenüber dem Innenrohr (3) durch ein strangförmiges Federelement (13) elastisch federnd abgestützt. Dieses Federelement (13) kann aus Kunststoff, weichem Gummi oder dergleichen bestehen. Wesentlich ist seine Weichheit und Elastizität. Dieses Federelement (13) soll nämlich das Einführen des Einsatzprofiles (10) in die Wandöffnung (17) ermöglichen, aber andererseits das Einsatzprofil (10) mit seiner Abstufung (11) gegen die verbleibende Wandung des Außenrohres (2) andrücken.

Der über die innenliegende Fläche des Einsatzprofiles (10) vorstehende Strangbereichteil (14) weist beim Ausführungsbeispiel im Querschnitt ein stark abgerundetes Profil auf. Dieses Profil läßt sich weitgehend verändern. Es haben sich V-, oval-, kreis-förmige Profile des Strangbereichteiles (14) bewährt.

Es versteht sich von selbst, daß die geometrischen Formen des Gegenstandes der Erfindung in unterschiedlicher Weise verändert werden können. Dies trifft insbesondere auf die Querschnittsgestaltung der außenliegenden Rinne (6) in Verbindung mit der innenliegenden Rinne (8) sowie auf die Querschnittsgestaltung des Einsatzprofiles (10) zu.

Es wird in jedem Falle angestrebt, das Einsatzprofil (10) nicht nur parallel zur Längsachse des Metallprofiles (1) einzusetzen sondern auch in schräger Lage längs dieser Achse sowie auch quer hierzu. Zu diesem Zweck ist der Querschnitt des Einsatzprofiles (10) so zu gestalten, daß das Einsatzprofil (10) gewissermaßen diagonal zur Wandöffnung (17) (Figur 2) in diese eingesetzt werden kann. Dadurch untergreift die eine Wandstufung (11) den verbleibenden Rand der Wandöffnung (17). Dadurch daß der Strang (13) weich federnd ausgebildet ist, kann man dann beim Einführen das Einsatzprofil (10) gegen das Innenrohr (3) des Metallprofiles (1) andrücken und verformen, so daß der andere Rand des Einsatzprofiles (10) den zugeordneten Rand der Wandöffnung (17) ebenfalls hintergreift.

### STÜCKLISTE

- 1: Metallprofil
- 2: Außenrohr
- 3: Innenrohr
- 4: Steg
- 5: Außenwandfläche
- 6: Rinne
- 7: Innenfläche
- 8: Rinne
- 9: abtrennbarer Wandstreifen
- 10: Einsatzprofil
- 11: Abstufung
- 12: Führung, Nut
- 13: Federelement, Strang
- 14: Strangbereichteil
- 15: Rinnenrand
- 16: Rinnenrand
- 17: streifenförmige Wandöffnung
- 18: stufenförmige Gestaltung
- 19: erhabener Bereich

## Patentansprüche

1. Metallprofil (1), insbesondere aus Leichtmetall, für die Bildung von Rahmenwerken mit Eckverbindungen, bestehend aus einem Außenrohr (2) und aus einem Innenrohr (3), die miteinander über Stege (4) verbunden sind, wobei sich in der Außenwandfläche (5) des Außenrohres (2) längs durchlaufende und zueinander parallele, wandschwächende Rinnen (6) zum Abtrennen des dazwischen befindlichen Wandstreifens (9) befinden, **gekennzeichnet** durch ein den abgetrennten Wandstreifen (9) ersetzendes Einsatzprofil (10) aus Leichtmetall, das an seinen außenliegenden Rändern eine der Wandstärke des Wandstreifens (9) entsprechend tiefe, den Rinnenrand (16) hintergreifende Abstufung (11) und an seiner innenliegenden Seite eine Führung (12) für die Aufnahme eines sich am Innenrohr (3) federnd abstützenden Federelementes (13) aufweist.

2. Metallprofil nach Anspruch 1, dadurch **gekennzeichnet,** daß das Einsatzprofil (10) an seiner innenliegenden Seite eine durchlaufende Nut als Führung (12) aufweist, in der ein Strang (13) aus einem federnde bzw. nachgiebige Eigenschaften aufweisenden Material, z. B. Kunststoff, Gummi oder dergleichen, abgestützt ist.

3. Metallprofil nach Anspruch 2, dadurch **gekennzeichnet,** daß der Strang (13) in die Nut (12) eingeklebt ist.

4. Metallprofil nach Anspruch 2 oder 3, dadurch **gekennzeichnet,** daß der über die innenliegende Seite des Einsatzprofils (10) vorstehende Teil (14) des Strangbereiches einen sich V-förmig, oval oder kreisförmig verjüngenden Querschnitt aufweist.

5. Metallprofil nach Anspruch 1 oder einem der folgenden, dadurch **gekennzeichnet,** daß die einzelne Wandschwächung des Außenrohres (2) aus einer verhältnismäßig breiten und tiefen außenliegenden Rinne (6) und aus einer weniger breiten und weniger tiefen innenliegenden Rinne (8) besteht, die gegenüber der Mitte der außenliegenden Rinne (6) in Richtung zum abtrennbaren Wandstreifen (9) versetzt ist.

6. Metallprofil nach Anspruch 5, dadurch **gekennzeichnet,** daß der die außenliegende Rinne (6) gegen den abtrennbaren Wandstreifen (9) begrenzende Rinnenwand (15) stark rinnenverbreiternd abgeschrägt ist.
